Europäisches Patentamt

European Patent Office

Office européen des brevets

(11) Veröffentlichungsnummer: **0 049 501**
**B1**

(12) **EUROPÄISCHE PATENTSCHRIFT**

(45) Veröffentlichungstag der Patentschrift: 26.03.86

(21) Anmeldenummer: 81107872.4

(22) Anmeldetag: 02.10.81

(51) Int. Cl.⁴: **G 01 L 9/04**

(54) **Anordnung zur Messung des Druckverlaufes in zylinderförmigen Hohlkörpern.**

(30) Priorität: 06.10.80 DE 3037753

(43) Veröffentlichungstag der Anmeldung:
14.04.82 Patentblatt 82/15

(45) Bekanntmachung des Hinweises auf die
Patenterteilung:
26.03.86 Patentblatt 86/13

(84) Benannte Vertragsstaaten:
AT FR GB IT SE

(56) Entgegenhaltungen:
DE-A-2 831 939
FR-A-2 215 615

(73) Patentinhaber: **Siemens Aktiengesellschaft
Berlin und München Wittelsbacherplatz 2
D-8000 München 2 (DE)**

(72) Erfinder: **Dunemann, Klaus, Dipl.-Ing.
Wilhelm-Roether-Strasse 21
D-7516 Karlsbad 1 (DE)**
Erfinder: **Fritz, Harald, Ing. grad.
Hebelstrasse 5
D-7517 Waldbronn 3 (DE)**

**Die Akte enthält technische Angaben, die nach dem Eingang der Anmeldung eingereicht wurden und die nicht in dieser Patentschrift enthalten sind.**

Courier Press, Leamington Spa, England.

## Beschreibung

Die Erfindung bezieht sich auf eine Anordnung zur Messung des Druckverlaufes in zylinderförmigen Hohlkörpern über deren Dehnung in Umfangsrichtung, mit Hilfe von zwei Paaren einander am Hohkörper jeweils radial gegenüberliegender, einachsig dehnungsempfindlicher, elektrischer Aufnehmer für Dehungen im Umfangs- und Längsrichtung, die in einer elektrischen Widerstandsbrückenschaltung zusammen geschaltet sind, wobei in jedem Paar der Aufnehmer für die Längsdehnung und der Aufnehmer für die Umfangsdehnung elektrisch hintereinandergeschaltet sind.

Ein derartige Anordnung ist der FR—A— 2 215 615 zu entnehmen.

Aus der DE—A—28 31 939 ist es bekannt, daß, insbesondere wenn der zylinderförmige Hohlkörper eine Rohrleitung ist, anderweitig auf diese Rohrleitung einwirkende Biege- oder Zugbeanspruchungen Dehnungen und Stauchungen an der Rohrleitungsoberfläche hervorrufen können, die größer sind als die durch den Innendruck in der Rohrleitung bedingte Dehnung des Rohrleitungsumfanges.

Insbesonder bei Brennstoffleitungen gehen die meisten Störungen einer Messung des Innendrucks über die Dehnung der Leitung in Umfangsrichtung von Biege- und Längsbeanspruchungen des Rohres aus, die durch den Lauf der Maschine hervorgerufen werden.

Bei dem Gegenstand der FR—A—2215615 sind die in Umfangs richtung eines Meßrohres und die in Längsrichtung des Meßrohres angeordneten Dehnungsmeßstreifen in jeweils einander diametral gegenüberliegenden Halbzweigen einer Widerstandsbrückenschaltung angeordnet. Im ursprünglichen Zustand sind die Widerstandswerte der Dehnungsmeßstreifen gleich groß, so daß die Widerstandsbrückenschaltung abgeglichen ist. Findet im Rohr beispielsweise eine Erhöhung des Innendruckes statt, so werden die Dehnungsmeßstreifen in Umfangsrichtung stärker gedehnt als die in Längsrichtung des Rohres angeordneten. Dadurch wird die Widerstandsbrückenschaltung verstimmt. Wird das Meßrohr noch einer zusätzlichen Zugbelastung ausgesetzt, so werden dadurch die Dehnungsmeßstreifen in Längsrichtung gedehnt, während die Dehnungsmeßstreifen in Umfangsrichtung schrumpfen. Dies ruft eine der vorerwähnten Verstimmung entgegengesetzte Widerstandsbrückenverstimmung hervor. Der Meßeffekt wird also bei der bekannten Schaltung durch eine suzätzliche Zugbelastung des Meßrohres abgeschwächt oder gar aufgehoben. Die verschieden großen Ausgangsspannungen der Dehnungsmßstreifen für die Umfangsrichtung und für die Längsrichtung werden beid dem Druckaufnehmer nach der FR—A—2215 615 innerhalb einer der Brückenschaltung nachgeschalteten Einschaltung berücksichtigt.

Die Erfindung geht von der Erkenntnis aus, daß Meßfehler eines einachsig dehnungsempfindlichen Aufnehmers zur Erfassung der Umfangsdehnungen weniger unmittelbar von zusätzlichen Biege- oder Längsbeanspruchungen herrühren, sondern hauptsächlich von über die Querkontraktion in Umfangsänderungen ungewandelten Axial—oder Beigekräften.

Der Erfindung lag die Aufgabe zugrund, derartige über die Querkontraktion auf die Umfangsdehnung durchschlagende, durch Längsdehnungen infolge von Biege- oder Zugbeanspruchungen verursachte Störungen zu kompensieren.

Bei einer eingangs genannten Anordnung wird diese Aufgabe gemäß der Erfindung durch die kennzeichnenden Merkmale des Anspruchs 1 gelöst.

Beispielsweise wird die von einer zusätzlichen Zugbelastung hervorgerufene Schrumpfung der in Umfangsrichtung angeordneten Dehnungsmeßstreifen durch die gleichzeitige Dehnung der damit in Serie innerhalb eines Teilzweiges geschalteten und entsprechend dem Poisson-Effekt bemessenen Dehnungsmeßstreifen in Längsrichtung elektrisch kompensiert.

Zweckmäßig sind die elektrisch hintereinandergeschalteten Aufnehmer eines Paares um Umfang des Hohlkörpers eng benachbart angeordnet.

Als einachsige Dehnungsaufnehmer bewähren sich Widerstandsdehungsmeßstreifen, wobei die für die Längsdehnung vorgesehenen Streifen den mit der reziproken Poisson-Konstante (Querzahl) multiplizierten Widerstandswert des für die Umfangsdehnung vorgesehenen Streifens aufweisen.

Mit Vorteil wird die neue Anordnung zur Messung des Druckes in Brenstoffeinspritzleitungen von Dieselbrennkraftmaschinen verwendet.

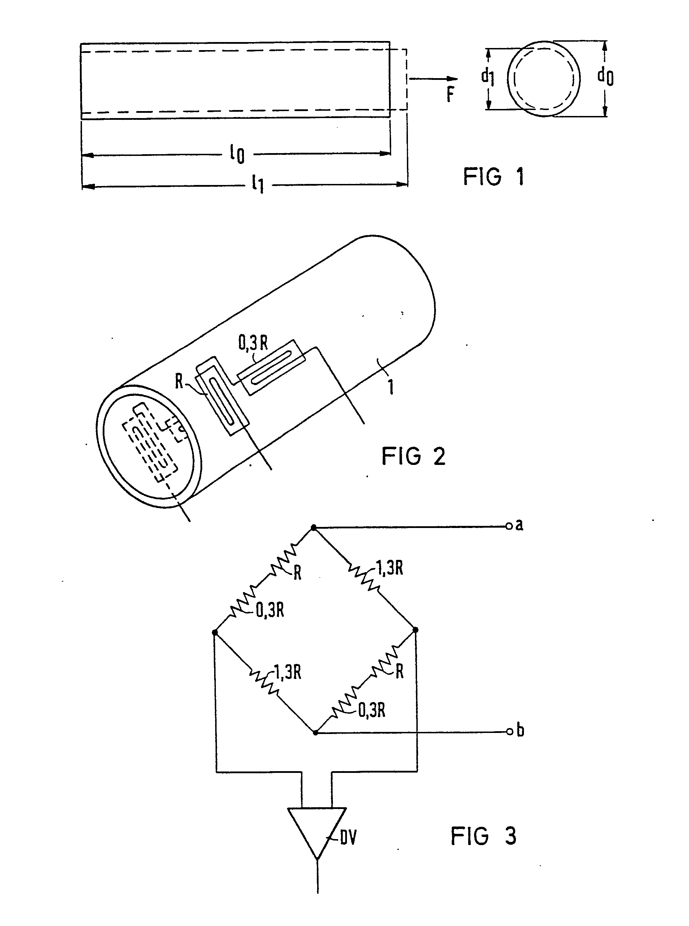

Die Erfindung wird anhand von drei Figuren erläutert. Die Figur 1 stellt einen zugbelasteten zylindrischen Körper dar. Anhand dieser Figur werden die Gegebenheiten der Querkontraktion abgeleitet.

In Figur 2 ist in perspektivischer Ansicht ein Rohrleitungsstück mit daran angebrachten Dehnungsmeßstreifen dargestellt.

Figur 3 ist ein Schaltbild, das die gegenseitige Verschaltung von Dehnungsmeßstreifen in einer elektrischen Brückenschaltung zeigt.

Die Figur 1 stellt in einer Aufsicht und in einem Querschnitt einen zylindrischen Körper dar, der an einem Ende eingespannt und am freien Ende mit einer Zugkraft F belastet ist. Der Zylinder wird unter der Wirkung der Zugkraft F von einer ursprünglichen Länge $l_0$ auf eine Länge $l_1$ gedehnt. Die Längendifferenz zwischen dem unbelasteten und dem belasteten Zustand ist $l_1-l_0=\Delta l$. Ein ursprünglicher Durchmesser $d_0$ des Zylinderkörpers wird unter der Wirkung der Zugkraft F zu einem Druchmesser $d_1$ verkürzt, wie an der Querschnittdarstellung der Figur 1 ersichtlich ist. Die Durchmesser differenz $\Delta d$ beträgt $d_0-d_1$, die Dehnung in Längsrichtung

$$\varepsilon_1 = \frac{\Delta l}{l_0},$$

die Querdehnung

$$\varepsilon_q = \frac{\Delta d}{d_0}.$$

Das Verhältnis der beiden Dehnungen

$$\frac{\varepsilon_1}{\varepsilon_q}$$

wird in der Festigkeitslehre "Poisson-Konstante" genannt. Sie ist ein Maß für die Wirkung einer Längsdehnung über die Querkontraktion. Ihr Kehrwert heißt Querzahl und beträgt für Stahl ungefähr 0,3.

Bei einem mit Innendruck beaufschlagten Rohr kommt es zusätzlich zur Umfangsdehnung auch zu einer etwa halb so großen Dehnung in axialer Richtung. Durch die zusätzlich eingebauten Dehnungsaufnehmer für die axiale Dehnung ergibt sich dadurch eine Erhöhung des Meßeffektes.

In Figur 2 ist perspektivisch ein Stück einer Rohrleitung 1 dargestellt. Die Rohrleitung 1 ist zur Messung des Druckes oder des Druckverlaufes mit Dehnungsmeßstreifen R versehen, die die Aufweitung der Rohrleitung in Umfangsrichtung feststellen. Die Rohrleitung 1 wird unter Druck auch in Längsrichtung gedehnt. Diese Dehnung hat infolge der Querkontraktion eine Abnahme des Meßeffekts in Umfangsrichtung zur Folge. Diese Verminderung des Meßeffekts kann ebenso wie Fehler infolge zusätzlicher axialer Dehnungen kompensiert werden durch einen mit dem Widerstandsdehnungsmeßstreifen R in Serie geschalteten zweiten Widerstandsdehnungsmeßstreifen 0,3 R. Dabei ist 0,3 die dimensionslose Querzahl, das ist der Kehrwert der Poisson-Konstante, die bestimmend für die Querkontraktion ist. Die Querzahl kann für Metalle, insbesondere Stahl, mit 0,3 angenommen werden. Auf der nicht sichtbaren Rückseite der Rohrleitung 1 ist ein zweites Dehnungsmeßstreifenpaar angedeutet, das ebenfalls aus einem umfangsdehnungsempfindlich angebrachten Streifen R und einen die Längsdehnung erfassenden Streifen 0,3 R besteht.

Die Figur 3 zeigt eine Brückenschaltung, in der in zwei gegenüberliegenden Brückenzweigen die Serienschaltungen von jeweils zwei Dehnungsmeßstreifen R und 0,3 R liegen. Es sind die Streifenpaare, die in Figur 2 auf einander diametral gegenüberliegenden Stellen der Rohrleitung 1 angebracht sind. In den zwei anderen einander gegenüberliegenden Brückenzweigen sind zur Vervollständigung der Brückenschaltung zwei Widerstände 1,3 R eingefügt. Die Speisediagonale der Brückenschaltung ist an zwei Klemmen a, b angeschlossen, denen eine geeignete Speisespannung zu entnehmen ist. Die Meßdiagonale liegt an den Eingängen eines Differenzverstärkers DV, an dessen Ausgang entweder ein Znezeigeinstrument oder weiter elektrische Schaltungen zur Meßwertverarbeitung angeschlossen sein können.

**Patentansprüche**

1. Anordnung zur Messung des Druckverlaufes in zylinderförmigen Hohlkörpern (1) über deren Dehnung in Umfangsrichtung, mit Hilfe von zwei Paaren einander an Hohlkörper jeweils radial gegenüberliegender, einachsig dehnungsempfindlicher, elektrischer Aufnehmer (R; 0,3 R) fur Dehnungen in Umfangs, und Längsrichtung, die in einer elektrischen Widerstandsbrückenschaltung zusammen geschaltet sind, wobei in jedem Paar der Aufnehmer (0,3 R) für die Längsdehnung und der Aufnehmer (R) für die Umfangsdehnung elektrisch hintereinandergeschaltet sind, dadurch gekennzeichnet, daß jeweils die Hintereinanderschaltung des Aufnehmers (R) für die Umfangsdehnung und des gegenüber diesem Aufnehmer (R) eine mit dem Kehrwert des Poisson-Konstanten des Hohlkörper materials multiplizierte Dehnungsempfindlichkeit aufweisenden Aufnehmers (0,3 R) für die Längsdehnung in jeweils einem von zwei sich diametral gegenüberliegenden Teilzweigen der Brückenschaltung liegt.

2. Anordnung nach Anspruch 1, dadurch gekennzeichnet, daß die hintereinandergeschalteten Aufnehmer (R; 0,3 R) eines Paares am Umfang des Hohlkörpers eng benachbart angeordnet sind.

3. Anordnung nach Anspruch 1 oder 2, dadurch gekennzeichnet, daß die Dehnungsaufnehmer Widerstandsdehnungsmeßstreifen sind und daß der Streifen für die Längsdehnung den mit der Kehrwert der Poisson-Konstanten multiplizierten Widerstandswert des Streifens für die Umfangsdehnung aufweist.

4. Anordnung nach Anspruch 1 oder einem der vorausgehenden Ansprüche, gekennzeichnet durch ihre Verwendung als Einspritzdruckmeßanordnung bie Dieselbrennkaftmaschinen.

**Revendications**

1. Dispositif pour mesurer la variation de la pression dans des corps creux cylindriques (1) en fonction de leur allongement dans le sens périphérique, à l'aide de deux paires de capteurs électriques (R; 0,3 R) uniaxialement sensibles à l'allongement, pour des allongements dans le sens périphérique et dans le sens longitudinal, disposés radialement l'un en face de l'autre dans chaque paire, qui sont connectés ensemble dans un montage électrique en pont de résistances, dans lequel le capteur (0,3 R) pour l'allongement longitudinal et le capteur (R) pour l'allongement périphérique de chaque paire sont électriquement montés en série, caractérisé en ce que chaque montage en série du capteur (R) pour l'allongement périphérique et du capteur (0,3 R) pour allongement longitudinal, lequel présente une sensibilité à l'allongement multipliée par la valeur inverse de la conconstante de Poisson du matériau du corps creux vis à vis du capteur (R) pour l'allongement périphérique, est disposé dans l'une de deux branches partielles diamétralement opposées du montage en pont.

2. Dispositif selon la revendication 1, caractérisé en ce que les capteurs (R; 0,3 R) montés en série d'une paire sont disposés à faible distance l'un de l'autre à la périphérie du corps creux.

3. Dispositif selon la revendication 1 ou 2, caractérisé en ce que les capteurs d'allongement sont des jauges extensométriques à résistance et que la jauge pour allongement longitudinal présente la valeur de résistance de la jauge pour l'allongement périphérique multipliée par la valeur réciproque de la constante de Poisson.

4. Dispositif selon la revendication 1, ou l'une des autres revendications précédentes, caractérisé par son utilisation comme dispositif de mesure de la pression d'injection sur des moteurs diesel.

**Claims**

1. An arrangement for measuring the pressure flow in cylindrical hollow bodies (1) by virtue of the extension thereof in the peripheral direction, with the assistance of two pairs of electrical sensors (R; 0.3 R) for extensions in the peripheral and longitudinal direction, which are arranged radially opposite one another on the hollow body, are uni-axially extension-sensitive, and are interconnected in an electrical resistance bridge circuit, where in each pair the sensor (0.3 R) for the longitudinal extension and the sensor (R) for the peripheral extension are electrically connected in series, characterised in that the series arrangement of the sensor (R) for the peripheral extension and the sensor (0.3 R) for the longitudinal extension which, in comparison to the sensor (R) has an extension sensitivity multiplied by the reciprocal value of the Poisson constant of the hollow body material, is located in one of two subsidiary arms of the bridge circuit arranged diametrically opposite one another.

2. An arrangement as claimed in Claim 1, characterised in that the series-connected sensors (R; 0.3 R) of a pair are arranged closely adjacent to one another at the periphery of the hollow body.

3. An arrangement as claimed in Claim 1 or 2, characterised in that the extension sensors are resistance strain-gauge strips, and that the strip for the longitudinal extension possesses the resistance value of the strip for the peripheral extension multiplied by the reciprocal value of the Poisson constant.

4. An arrangement as claimed in Claim 1 or one of the preceding Claims, characterised by its use as an injection pressure-measuring arrangement in diesel fuel engines.

FIG 1

FIG 2

FIG 3